(19) Europäisches Patentamt
European Patent Office
Office européen des brevets

(11) Numéro de publication: **0 522 902 B1**

(12) **FASCICULE DE BREVET EUROPEEN**

(45) Date de publication de fascicule du brevet: **08.02.95**

(51) Int. Cl.[6]: **C08G 59/12**, C08G 59/22, C07D 303/16, G02F 1/35

(21) Numéro de dépôt: **92401703.1**

(22) Date de dépôt: **18.06.92**

# (54) Matériaux réticulables thermiquement pour application en optique non linéaire.

(30) Priorité: **02.07.91 FR 9108233**

(43) Date de publication de la demande:
**13.01.93 Bulletin 93/02**

(45) Mention de la délivrance du brevet:
**08.02.95 Bulletin 95/06**

(84) Etats contractants désignés:
**DE FR GB NL**

(56) Documents cités:
**EP-A- 0 287 233**
**EP-A- 0 363 237**
**US-A- 4 757 130**

(73) Titulaire: **THOMSON-CSF**
**173, Boulevard Haussmann**
**F-75008 Paris (FR)**

(72) Inventeur: **Le Barny, Pierre**
**THOMSON-CSF,**
**SCPI,**
**Cédex 67**
**F-92045 Paris la Défense (FR)**
Inventeur: **Chastaing, Evelyne**
**THOMSON-CSF,**
**SCPI,**
**Cédex 67**
**F-92045 Paris la Défense (FR)**
Inventeur: **Dubois, Jean-Claude**
**THOMSON-CSF,**
**SCPI,**
**Cédex 67**
**F-92045 Paris la Défense (FR)**
Inventeur: **Muller, Sophie**
**THOMSON-CSF,**
**SCPI,**
**Cédex 67**
**F-92045 Paris la Défense (FR)**
Inventeur: **Soyer, Françoise**
**THOMSON-CSF,**
**SCPI,**
**Cédex 67**
**F-92045 Paris la Défense (FR)**

(74) Mandataire: **Guérin, Michel et al**
**THOMSON-CSF**
**SCPI**
**B.P. 329**
**50, rue Jean-Pierre Timbaud**
**F-92402 Courbevoie Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

La présente invention concerne des matériaux polymères utilisables en optique non linéaire. Plus précisément elle concerne un nouveau type de matériau dans lequel les entités actives en optique non linéaire (ONL) sont capables de générer à l'aide d'agents réticulants, un réseau tridimensionnel de polymère réticulé. La structure chimique des entités actives en optique non linéaire est telle que les matériaux auxquels elles donnent naissance sont aptes à générer les effets optiques non linéaires du second ordre. Et la non centrosymétrie du matériau, indispensable pour obtenir les effets optiques non linéaires est obtenue par application d'un champ électrique continu à la température de transition vitreuse du réseau tridimensionnel de polymère réticulé.

De tels matériaux peuvent être utilisés avec avantage dans la réalisation de composants pour l'optique intégrée tel qu'un doubleur de fréquence opérant à des longueurs d'onde comprises entre 0,8 et 2 $\mu$m ou un modulateur électrooptique utilisant une onde électromagnétique de longueur d'onde comprise entre 0,6 et 2 $\mu$m. En effet, les matériaux organiques ont montré qu'ils permettaient d'obtenir des non linéarités optiques aussi grandes que les matériaux inorganiques de type niobate de lithium ou KTP, mais qu'ils possédaient par ailleurs des avantages décisifs comme :

- un seuil de dommage optique plus élevé ;
- un temps de réponse plus court (subpicoseconde) ;
- un ajustement possible des propriétés physiques grâce à la flexibilité de la synthèse organique ;
- un coût potentiel inférieur.

Parmi les matériaux organiques, les polymères semblent être les mieux adaptés à l'optique intégrée. Jusqu'à présent, les matériaux polymères proposés en vue de réaliser des générateurs de second harmonique ou des modulateurs électrooptiques sont :

- des solutions solides de petites molécules (ou colorants) actives en optique non linéaire dissoutes dans une matrice de polymère amorphe ou dans un polymère cristal liquide ;
- des copolymères dans lesquels l'entité active en optique non linéaire est greffée au squelette du copolymère, ce qui permet de s'affranchir des problèmes de solubilité des molécules de colorant dans la matrice de polymère et conduit à des matériaux pouvant renfermer jusqu'à 100 % de molécules actives.

Néanmoins, bien que les copolymères aient une stabilité dans le temps de leurs propriétés non linéaires accrue par rapport aux solutions solides, ils souffrent de phénomènes de relaxation au niveau de l'orientation des colorants obtenue après polarisation, ces relaxations étant rédhibitoires pour envisager une application industrielle.

Pour pallier ces problèmes de relaxation plusieurs équipes de recherche ont proposé différentes solutions toutes basées sur le principe de la réticulation. Schématiquement ces solutions peuvent être classées en deux familles :

Dans la première famille les entités non linéaires (A) et les groupements réticulables (B) sont distincts, ils sont greffés à un même squelette polymère et sous l'action de la température ou d'une source lumineuse, ils peuvent réticuler. En orientant sous champ électrique et température les groupements (A), on obtient un polymère réticulé actif en optique non linéaire. Ce type de polymère a été décrit dans la Demande de Brevet FR 88 05790 par P. LE BARNY et ses collaborateurs.

Dans la seconde famille, le groupement réticulable (B) est directement lié à l'entité non linéaire (A).

Pour cela, l'entité (A) peut constituer la chaîne latérale d'un polymère ; par l'intermédiaire d'une molécule (C) dont les deux extrémités comportent des fonctions réticulables, une réticulation thermique ou photochimique peut être réalisée sous champ électrique continu générant un matériau orienté dont les chaînes latérales sont accrochées entre elles par l'intermédiaire des molécules (C). De tels polymères ont fait l'objet d'une Demande de Brevet FR 90 13041 par S. MULLER et ses collaborateurs.

Ou l'entité (A) peut faire partie d'une petite molécule polyfonctionnelle dont les deux extrémités comportent des groupements (C) réticulables. Dans un tel cas de figure les petites molécules actives s'accrochent entre elles par l'intermédiaire des molécules réticulables (C). Ce type de structure exploitée par IBM (M. EICH, B. RECK, D.Y. YOON, C. WILLSON et G.C. BJORKLUND, J. Appl. Phys. 66 (7) 1989 ; B. RECK, M. EICH, D. JUNGBAUER, R.J. TWIEG, C.G. WILLSON, D.Y. YOON, G.C. BJORKLUND, SPIE 1147 "Non linear optical properties of organic materials II" 74-83 (1989) ; D. JUNGBAUER, B. RECK, R. TWIEG, D.Y. YOON, C.G. WILLSON et D.J. SWALEN, Appl. Phys. Lett. 56 (26) 1990) conduit à la formation d'un réseau de molécules actives accrochées les unes aux autres.

Récemment, un système photoréticulable basé sur des petites molécules portant deux fonctions cinnamates mises en solution dans du polyvinylcinnamate a été proposé (B.K. MANDAL, J. KUMAN, J.C. HUANG, S. TRIPHATHY, Makromol. Chem. Rapid. Commun. 12 63-68 (1991)).

Parmi les systèmes déjà décrits, seuls ceux basés sur la réticulation thermique de molécules portant des fonctions amines par des molécules portant des fonctions epoxy ont conduit à des matériaux actifs et stables en optique non linéaire et ce jusqu'à 80 ° C. Le système le plus performant a été obtenu à partir des deux types de molécules suivantes :

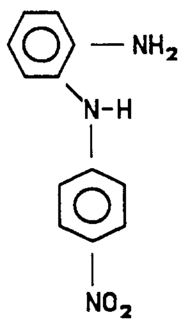

et

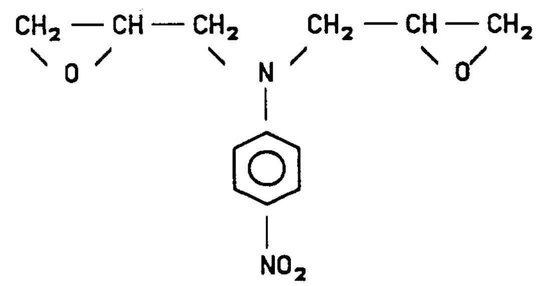

(D. JUNGBAUER, B. RECK, R. TWIEG, D.Y. YOON, C.G. WILLSON and J.D. SWALEN, Appl. Phys. Lett. 56 (26) 2610-2612 (1990)).

Un tel système présente cependant certains inconvénients :

En effet :

- La réactivité des amines aromatiques est faible ce qui nécessite des temps de cuisson très long pour obtenir le réseau. D'autre part lorsque le réseau se forme, les groupements non linéaires se mettent en position de chaînes latérales par rapport au squelette du polymère, sans être relié par l'intermédiaire de liaisons rigides audit squelette. Des mouvements de type rotation tels que ceux décrits ci-dessous sont alors possibles étant à l'origine des relaxations de l'ordre orientationnel du système. Malgré la formation d'un réseau, les molécules actives optiquement ne sont que partiellement asujetties à rester dans leur position initiale imposée au cours de l'orientation sous champ électrique.

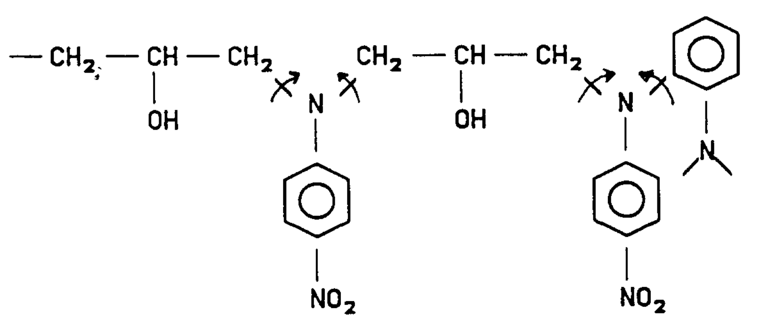

↱ libre rotation.

Enfin, les entités non linéaires utilisées dans un tel système ne possèdent pas une forte valeur de susceptibilité optique d'ordre 2 qui les aurait conduites à générer de bonnes performances en optique non linéaire.

C'est pourquoi, la présente invention propose de nouvelles molécules actives en optique non linéaire et réticulables thermiquement caractérisées en ce qu'elles répondent aux formules chimiques suivantes :

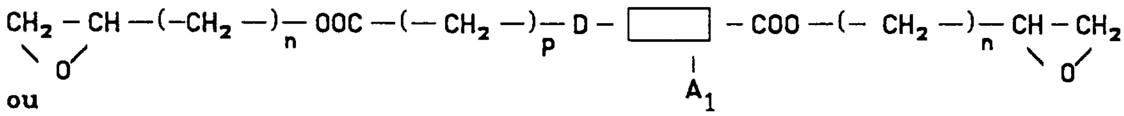

ou

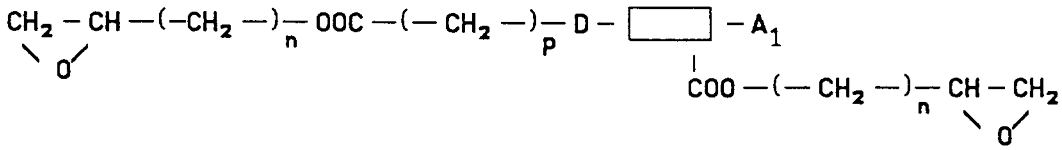

avec $1 \leq n \leq 5$

$1 \leq p \leq 5$

D étant 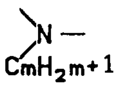 avec $1 \leq m \leq 5$ ou —O—

$A_1$ étant $-NO_2$ ou CN

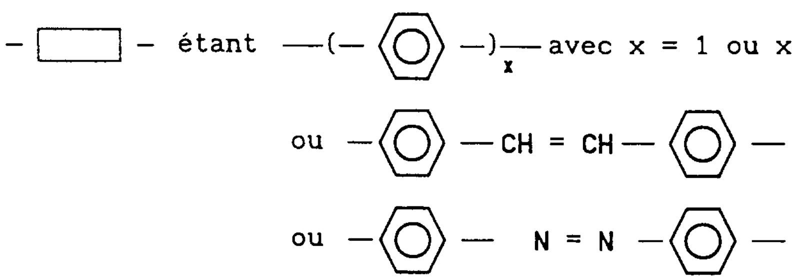

étant … avec x = 1 ou x = 2

ou

ou

ou 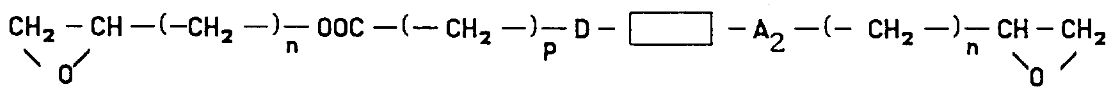

avec $1 \leq n \leq 5$

$1 \leq p \leq 5$

D étant 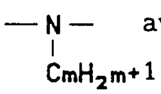 avec $1 \leq m \leq 5$ ou —O—

$A_2$ étant 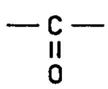 ou —COO—

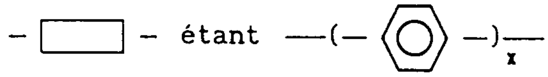 avec x = 1 ou x = 2

Ces molécules présentent le grand intérêt de pouvoir être réticulées à chacune de leur extrémité contribuant à la formation d'un réseau tridimensionnel de polymère dans lequel l'orientation des molécules actives est bloquée grâce à la réticulation. La mise en place de deux fonctions réticulables selon le grand axe de la molécule permet un meilleur verrouillage de l'orientation active après polarisation, comparé à l'art antérieur. La structure chimique de l'entité non linéaire de type fonction donneuse d'électrons (D) accrochée à un groupement dans lequel les électrons peuvent être délocalisés (▭) ledit groupement étant accroché à une fonction acceptrice d'électrons ($A_1$ ou $A_2$ peut être choisie en fonction de la transparence nécessaire à la longueur d'onde d'utilisation. Ainsi, dans le cas de modulateur électrooptique on souhaite une longueur d'onde d'absorption inférieure à 700 nm, pour une application laser vert, une longueur d'onde d'absorption inférieure à 350 nm et pour un laser bleu une longueur d'onde d'absorption inférieure à 300 nm.

La présente invention a aussi pour objet le procédé d'obtention de matériaux actifs et stables en optique non linéaire utilisant des molécules (I) actives en optique non linéaire et réticulable, caractérisé en ce qu'il comprend la réticulation desdites molécules (I) par des molécules (II) de type amines aliphatiques polyfonctionnelles conduisant à la formation d'un polymère réticulé.

Les amines aliphatiques polyfonctionnelles (II) pouvant être de type :

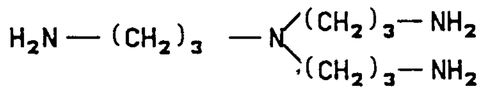

ou de type

$H_2N-(CH_2)_2-NH-(CH_2)_2-NH-(CH_2)_2-NH_2$

De tels amines sont plus réactives que les amines aromatiques employées dans l'art antérieur.

Le procédé d'obtention du polymère réticulé actif et stable en optique non linéaire, selon l'invention comprend de préférence les étapes suivantes :

- La réalisation d'un film (F) à partir d'une solution comprenant des molécules (I) et des molécules (II) par dépôt de la solution sur un substrat conducteur par centrifugation ;
- La précuisson du film (F) par chauffage progressif selon des rampes de températures comprises entre 50 °C et 100 °C ;
- La cuisson du film (F) sous champ électrique continu par ionisation de l'air grâce à une pointe métallique portée à très haute tension, à une température supérieure à 100 °C.

La présente invention sera mieux comprise et d'autres avantages apparaîtront à la lecture de la description qui va suivre, donnée à titre d'exemple non limitatif et grâce aux figures annexées parmi lesquelles :

- la figure 1 illustre la formule générale des molécules réticulables thermiquement et actives en optique non linéaire selon l'invention ;
- la figure 2 illustre le schéma réactionnel d'un exemple de molécules selon l'invention ;
- la figure 3 montre un exemple de rampes de températures à laquelle peut être soumis le matériau en formation selon l'invention et l'évolution de la température de transition vitreuse selon ces rampes ;
- la figure 4 montre les rampes de températures auxquelles est soumis le matériau à polariser ;
- la figure 5 illustre le comportement électrooptique d'un exemple de matériau selon l'invention ayant subi les rampes de températures de la figure 4, en fonction du temps à une température de 80 °C.

La formule générale des molécules selon l'invention est celle représentée à la figure 1.

Pour obtenir un polymère réticulé à partir de telles molécules on chauffe l'ensemble des molécules (I) et des molécules (II) à une température voisine de la température de transition vitreuse du matériau en formation. Dans un tel système, la réticulation chimique progresse en même temps que l'on chauffe le matériau sous champ électrique. Cependant la température de transition vitreuse n'est pas constante car elle augmente avec le degré d'avancement de la réticulation, il est donc nécessaire de tenir compte de cette évolution de température de transition vitreuse en augmentant progressivement la température de cuisson du système afin de conserver une mobilité suffisante des entités actives en optique non linéaire pour compléter les réactions de réticulation et orienter ces entités actives sous champ électrique continu. Les mesures de stabilité effectuées et développées ci-après prouvent que le système ainsi formé est particulièrement stable non seulement à la température ambiante mais encore à des températures voisines de 80 °C.

**EXEMPLE 1**

Synthèse du 4-[4 (N ethyl N hexanoate de glycidyle amino) phenyl azo] 3 nitrobenzoate de glycidyle.

Cette synthèse se fait en 6 étapes selon le schéma réactionnel de la figure 2.

Synthèse du chlorure de 6 bromohexanoyle (étape (1))

Dans un ballon de 250 ml muni d'une agitation magnétique, on introduit 58,5 g d'acide 6 bromohexanoïque (0,3 mole) et 85 ml de chlorure d'oxalyle. On agite et on additionne 1 ml de diméthylformamide (DMF).

On laisse la réaction se poursuivre pendant 1 heure à température ambiante. Puis l'excès de chlorure d'oxalyle est évaporé sous vide. Le produit brut est utilisé sans autre purification.

Synthèse du 6 bromohexanoate de méthyle (étape (2))

0,3 mole de chlorure de 6 bromohexanoyle sont dissous dans 150 ml de benzène. On ajoute 26 g (0,34 mole) de méthanol, en refroidissant, puis on additionne goutte à goutte 45 g (0,445 mole) de triethylamine en solution dans 50 ml de benzène. On agite à température ambiante pendant 16 heures. Le milieu réactionnel est ensuite coulé dans l'eau acidifiée par HCL. On extrait au benzène. Le produit brut est distillé sous vide. On obtient 43,7 g d'ester le point d'ébullition étant vers 80 °C, sous une pression de $2{,}25.10^{-2}$ Pa de Mercure et le rendement 69,7 %.

Synthèse de l'aniline N ethyle N hexanoate de méthyle (étape (3))

Dans un erlenmeyer de 250 ml muni d'une agitation magnétique, on introduit 12,1 g (0,1 mole) de N éthyl aniline, 23 g (0,11 mole) de 6 bromohexanoate de méthyle 10 g (0,119 mole) d'hydrogénocarbonate de sodium, 1 ml d'aliquat 336 dans 50 ml de 1,3 - diméthyl - 3,4,5,6 - tétrahydro - 2 (1H) - pyrinidinone (DMPU). On chauffe en agitant à 85 °C pendant 16 heures. Le milieu réactionnel revenu à température ambiante est filtré pour éliminer les sels inorganiques. Le produit brut est distillé sous vide. On obtient 24,18 g d'aniline tertiaire, le point d'ébullition étant situé vers 162 °C sous une pression de $2{,}25.10^{-2}$ Pa de Mercure et le rendement $\rho$ = 80,9 %.

Synthèse de l'aniline N éthyle N hexanoïque acide (étape (4))

24,18 g d'aniline N ethyle N hexanoate de méthyle sont mis en solution dans 250 ml d'une solution de KOH alcoolique à 20 %. On agite pendant 1 heure.

L'ethanol est évaporé sous vide. Le résidu est repris par l'eau puis acidifié par de l'acide chlorhydrique (HCl) à pH = 4.

On extrait à l'éther.

Après évaporation du solvant on obtient 14,97 g d'acide liquide avec un rendement de $\rho$ = 64,9 %.

Synthèse de l'acide 4-[4 (N ethyl N hexanoïque acide amino) phenyl azo] 3 - nitrobenzoïque

Dans un bécher muni d'une agitation magnétique, on dissout à chaud 1,82 g (0,01 mole) d'acide 3 nitro 4 aminobenzoïque dans 33,3 ml de soude 0,3 N. La solution est ensuite acidifiée par 4,55 ml de HCL 37 %. Le chlorhydrate précipite. La suspension de sel d'amine est refroidie vers 5 °C au moyen d'un mélange eau-glace. Puis on ajoute une solution de 0,75 g de nitrite de sodium (0,011 mole) dans 5,5 ml d'eau, goutte à goutte. On laisse revenir à température ambiante et on agite 2 heures à température ambiante. Il existe un insoluble éliminé par filtration (étape (5)).

Par ailleurs, 2,35 g (0,01 mole) de N ethyl N hexanoïque acide aniline sont dissous dans 20 ml d'ethanol et à cette solution, on ajoute goutte à goutte à température ambiante le sel de diazonium préalablement préparé. Un solide rouge précipite (étape (6)).

On continue d'agiter 1 heure après la fin de l'addition puis on laisse une nuit au réfrigérateur.

L'insoluble est séparé par filtration lavé à l'eau puis à l'hexane. On le sèche sous vide. On obtient 2,16 g de diacide. Rendement $\rho$ = 50,4 %.

Synthèse du 4-[4 (N ethyl N hexanoate de glycidyle amino) phenyl azo 3 - nitrobenzoate de glycidyle - (étape (7))

Dans un erlenmeyer de 10 ml muni d'une agitation magnétique, on dissout 0,428 g d'acide 4-[4 (N ethyl N hexanoïque acide amino) phenyl azo] 3 - nitrobenzoïque dans 5 ml d'héxaméthylphosphortriamide (HMPA). On ajoute 0,304 g de 1,8 - diazobiscyclo [5,4,0] - undec - 7 - ène (DBU) (0,002 mole) et on agite 30 mn à température ambiante ; enfin on ajoute 0,274 g (0,002 mole) d'epibromhidrine. Au bout de 1H20, on ajoute 0,13 g d'epibromhidrine. On stoppe la réaction 2H30 après son début.

Le milieu réactionnel est coulé dans 400 ml d'eau + 50 ml d'hexane en agitant. On laisse reposer 1 nuit au réfrigérateur et on filtre. On obtient un brut pateux.

Le produit brut est purifié par 2 chromatographies sur $SiO_2$ avec comme éluant $CHCL_3$.

On obtient 0,154 g de diester avec un rendement de 28,5 % et un point d'ébullition F = 45 °C..

**EXEMPLE 2**

Synthèse du 4-[4(N ethyl N butanoate de glycidyle amino) phenyl azo] 3 nitrobenzoate de glycidyle.

Cette synthèse est identique à celle de l'homologue supérieure décrite dans l'exemple 1.

| | |
|---|---|
| 4 bromobutanoate de methyl | $E_7$ = 58-60 °C $\rho$ = 56 % |
| N ethyl N butanoate de methyle aniline | $E_5$ = 138-140 °C $\rho$ = 30,5 % |
| N ethyl N butanoïque acide aniline | $\rho$ = 81,5 % |
| Acide 4-[4 N ethyl N butanoïque acide amino) phenyl azo 3 nitrobenzoïque | $\rho$ = 50 % |
| 4- [4 (N ethyl N butanoate de glycidyle amino) phenyl azo] 3 nitro benzoate de glycidyle | F = 109 °C |

Obtention de films orientés et réticulés.

A titre d'exemple, nous décrivons l'obtention de films orientés et réticulés, à partir du 4-[4(N ethyl N butanoate de glycidyle amino) phenyl azo] 3 nitrobenzoate de glycidyle [molécule (1)] et de la triethylènetetramine (TETA) [molécule (II)].

Afin de déterminer l'allure de l'évolution de la température de cuisson du système amine epoxy sous champ, nous avons mesuré l'évolution de la température de transition vitreuse d'un mélange stoechiométrique de 4-[4 (N ethyl N butanoate de glycidyle amino phenyl) azo] 3 nitrobenzoate de glycidyle et de TETA auquel a été ajouté 5 % en poids de polymethylmethacrylate (PMMA), en fonction de la température et du temps de cuisson.

Le terme mélange stoechiométrique signifie qu'il y a autant de fonction epoxy que de fonction $>$N-H ou encore :

$$\frac{[\text{diester}]}{[\text{TETA}]} = 3$$

L'addition de (PMMA) a pour but d'empêcher la formation de craquelures lors de la réticulation du film. Les résultats sont rassemblés en figure 3.

Obtention d'un film mince :

On réalise les 3 solutions suivantes :

100 mg de diester dans 0,597 g de $CHCL_3$ (1)
94,9 mg de TETA dans 4,476 g de $CHCL_3$ (2)
70 mg de (PMMA) dans 4,476 g de $CHCL_3$ (3)

A la solution (1) est ajouté 0,457 g de la solution (2) et 0,455 g de la solution (3). La solution (4) ainsi obtenue est filtrée sur millipore 0,2 $\mu$m et déposée à la tournette (2000 t/mn) sur une lame de verre recouverte d'ITO.

Nous avons déterminé l'évolution de la température de transition vitreuse du matériau en fonction de la température et du temps de cuisson, cette évolution est représentée à la figure 3.

Précuisson

Cette étape a pour but d'obtenir un prépolymère avant l'application du champ de polarisation.

On chauffe sous $N_2$ le film en suivant la rampe de température en fonction du temps. Cette rampe de température est illustrée à la figure 4.

Polarisation

Le film est ensuite porté à 140 °C pendant 15 heures sous azote en présence d'un champ continu généré par une pointe métallique portée à très haute tension de manière à ioniser l'air et créer un champ électrique au niveau du film (méthode Corona).

Puis le film est refroidi sous champ.

Test de stabilité

Le coefficient électrooptique $(r_{33})_0$ est mesuré à température ambiante à 1,32 µm.

Le film est ensuite chauffé à 80 °C pendant 3 h.

La figure 5 qui représente l'évolution du rapport $(r_{33})_t/(r_{33})_0$ en fonction du temps témoigne de la très bonne stabilité du matériau selon l'invention.

Chauffé 30 mn à 130 °C le film ne perd que 15 % de ses propriétés optiques non linéaires du second ordre.

## Revendications

**1.** Molécules actives en optique non linéaire et réticulables thermiquement, caractérisées en ce qu'elles répondent aux formules chimiques suivantes :

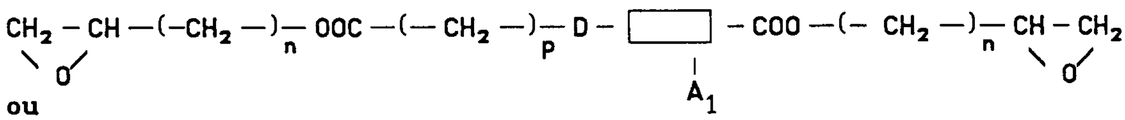

ou

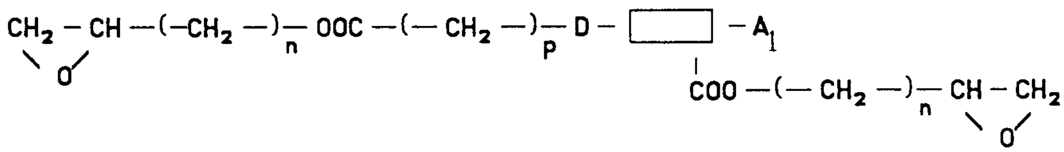

avec $1 \leq n \leq 5$
$1 \leq p \leq 5$

D étant 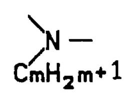 avec $1 \leq m \leq 5$ ou —O—

$A_1$ étant $—NO_2$ ou CN

– 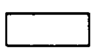 – étant 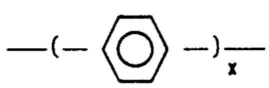 avec x = 1 ou x = 2

ou 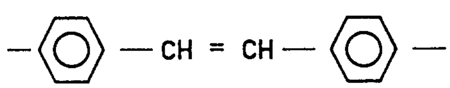

ou 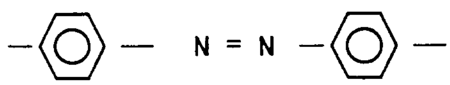

ou 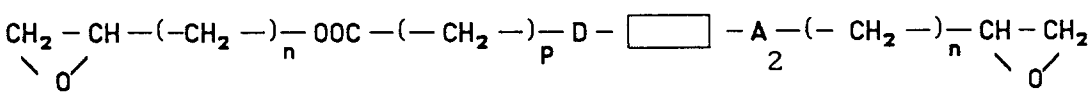

avec $1 \leq n \leq 5$
$1 \leq p \leq 5$

D étant 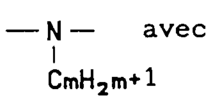 avec $1 \leq m \leq 5$ ou —O—

$A_2$ étant 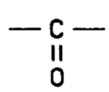 ou —COO—

– 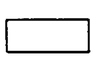 – étant 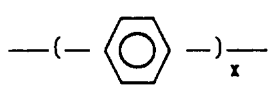 avec x = 1 ou x = 2

**2.** Procédé d'obtention de matériaux actifs et stables en optique non linéaire utilisant des molécules (I) selon la revendication 1, caractérisé en ce qu'il comprend la réticulation desdites molécules (I) par des molécules (II) de type amines aliphatiques polyfonctionnelles conduisant à la formation d'un polymère réticulé.

**3.** Procédé d'obtention selon la revendication 2, caractérisé en ce que les molécules (II) employées répondent à la formule chimique suivante :

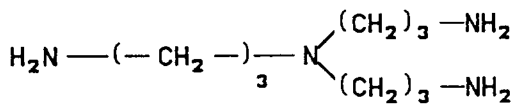

**4.** Procédé d'obtention selon la revendication 2, caractérisé en ce que les molécules (II) répondent à la formule chimique suivante :

$H_2N-(CH_2)_2-NH-(CH_2)_2-NH-(CH_2)_2-NH_2$

**5.** Procédé d'obtention du matériau actif et stable en optique non linéaire selon l'une des revendications 2 à 4, caractérisé en ce qu'il comprend les étapes suivantes :
- Réalisation d'un film (F) à partir d'une solution comprenant des molécules (I) et des molécules (II) par dépôt de la solution sur un substrat conducteur par centrifugation ;
- Précuisson du film (F) par chauffage selon des rampes de températures comprises entre 50 °C et 100 °C ;
- Cuisson du film (F) sous champ électrique continu par ionisation de l'air grâce à une pointe métallique portée à très haute tension, à une température supérieure à 100 °C.

## Claims

**1.** Non-linearly optically active, thermally cross-linkable molecules, characterized in that they comply with the following chemical formulas

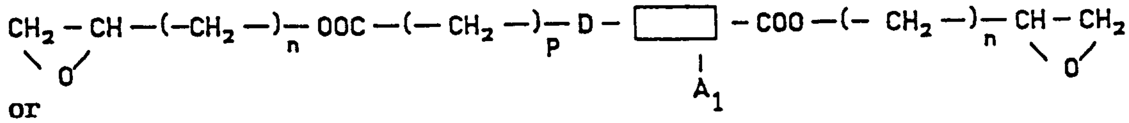

or

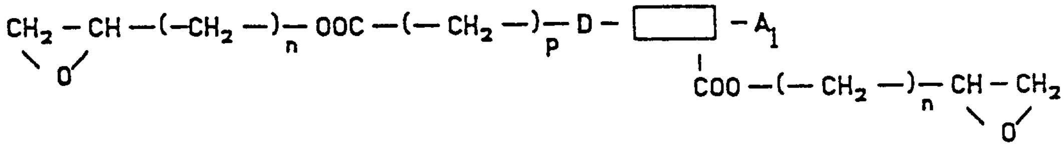

wherein $1 \le n \le 5$

$1 \le p \le 5$

D being 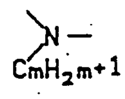 wherein $1 \le m \le 5$ or —O—

$A_1$ being —$NO_2$ or CN

– 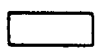 – being 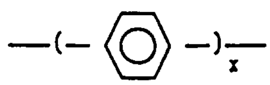 with x = 1 or x = 2

or 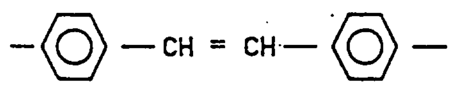

or 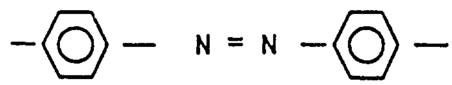

or 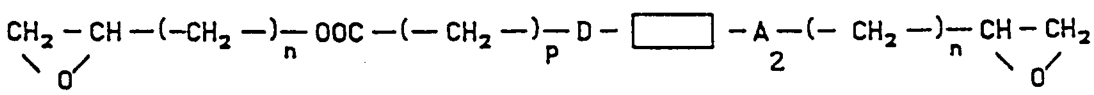

wherein $1 \le n \le 5$

$1 \le p \le 5$

D being 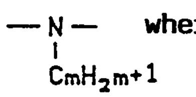 wherein $1 \le m \le 5$ or —O—

$A_2$ being 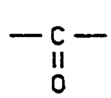 or —COO—

– 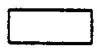 – being 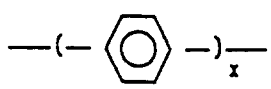 with x = 1 or x = 2

2. A method for the production of non-linear optically active and stable materials using molecules (I) in accordance with claim 1, characterized by the cross-linking of the molecules (I) with molecules (II) of the polyfunctional aliphatic amine type leading to the formation of a cross-linked polymer.

3. A method for production as claimed in claim 2, characterized in that the molecules (II) employed comply with the following chemical formula:

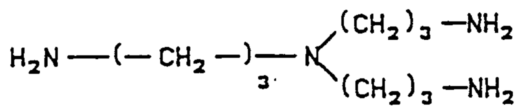

4. A method for production as claimed in claim 2, characterized in that the molecules (II) comply with the following chemical formula:

$H_2N—(CH_2)_2—NH—(CH_2)_2—NH—(CH_2)_2—NH_2$

5. A method for the production of the non-linear optically active and stable material as claimed in any one of the claims 2 through 4, characterized in that it includes the following stages:
   - the formation of a film (F) starting from a solution comprising molecules (I) and molecules (II) by the deposit of the solution on a conductive substrate by centrifuging;
   - precuring the film (F) by heating at temperature increases between 50° C and 100° C; and
   - curing the film (F) using a continuous electric field by air ionization caused by a metallic point electrode placed at a very high voltage, at a temperature in excess of 100° C.

**Patentansprüche**

1. Nichtlinear-optisch aktive und thermisch vernetzbare Moleküle, dadurch gekennzeichnet, daß sie den folgenden chemischen Formeln entsprechen:

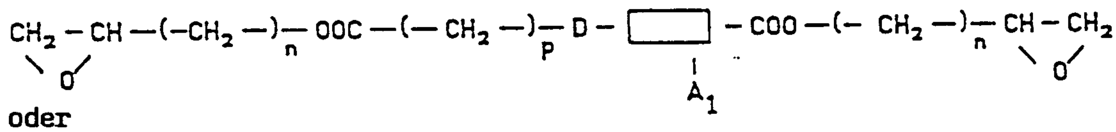

oder

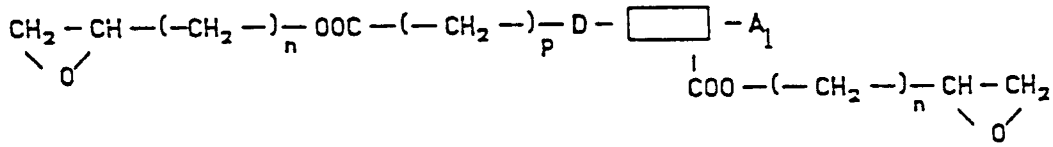

mit $1 \leq n \leq 5$
$1 \leq p \leq 5$

wobei D die Bedeutung 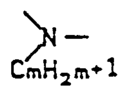 mit $1 \leq m \leq 5$ oder —O—,

$A_1$ die Bedeutung $-NO_2$ oder CN,

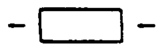 die Bedeutung 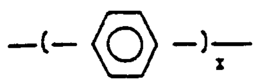 mit x = 1 oder x = 2

oder 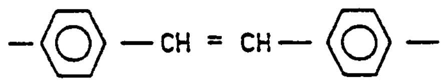

oder 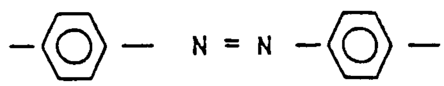

besitzt.

oder 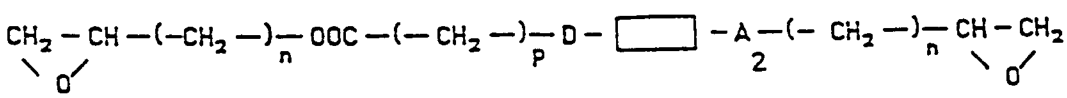

mit $1 \leq n \leq 5$
$1 \leq p \leq 5$

wobei D die Bedeutung 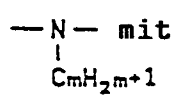 mit $1 \leq m \leq 5$ oder —O—

$A_2$ die Bedeutung 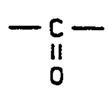 oder —COO—

und

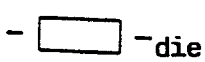 die Bedeutung 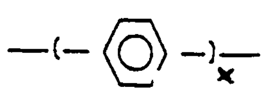 mit x = 1 oder x = 2

besitzt.

2. Verfahren zur Herstellung nichtlinear-optisch aktiver und stabiler Materialien unter Verwendung von Molekülen (I) gemäß Anspruch 1, gekennzeichnet durch die Vernetzung der Moleküle (I) durch Moleküle (II) der Art polyfunktioneller aliphatischer Amine, welche zur Bildung eines vernetzten Polymers führt.

3. Herstellungsverfahren nach Anspruch 2, dadurch gekennzeichnet, daß die verwendeten Moleküle (II) der folgenden chemischen Formel entsprechen:

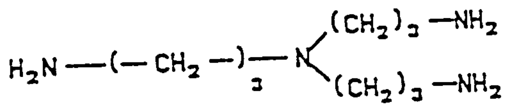

4. Herstellungsverfahren nach Anspruch 2, dadurch gekennzeichnet, daß die Moleküle (II) der folgenden chemischen Formel entsprechen:

$H_2N-(CH_2)_2-NH-(CH_2)_2-NH-(CH_2)_2-NH_2$

5. Verfahren zur Herstellung eines nichtlinear-optisch aktiven und stabilen Materials nach einem der Ansprüche 2 bis 4, dadurch gekennzeichnet, daß es die folgenden Stufen umfaßt:
   - Ausgehend von einer die Moleküle (I) und die Moleküle (II) umfassenden Lösung wird ein Film (F) durch Abscheiden der Lösung auf einem leitenden Substrat durch Zentrifugieren gebildet;
   - der Film (F) wird durch Erhitzen bei ansteigenden Temperaturen zwischen 50 °C und 100 °C vorgehärtet;
   - der Film (F) wird unter einem elektrischen Gleichfeld durch Ionisation der Luft dank einer auf eine sehr hohe Spannung gebrachten Metallspitze bei einer Temperatur oberhalb von 100 °C gehärtet.

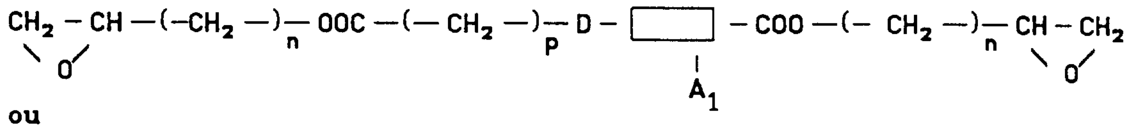

ou

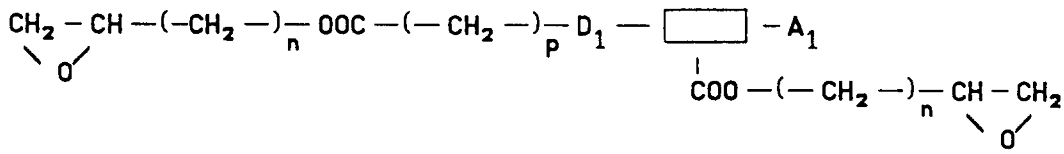

avec $1 \leq n \leq 5$

$1 \leq p \leq 5$

D étant 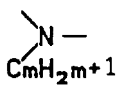 avec $1 \leq m \leq 5$ ou —O—

$A_1$ étant —$NO_2$ ou CN

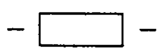 étant 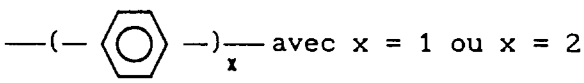

ou 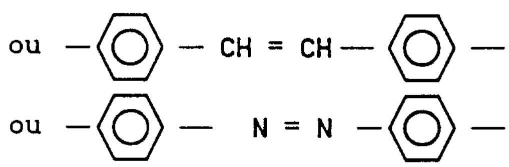

avec $1 \leq n \leq 5$

$1 \leq p \leq 5$

D étant 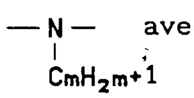 avec $1 \leq m \leq 5$ ou —O—

$A_2$ étant 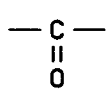 ou —COO—

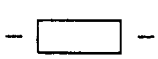 étant 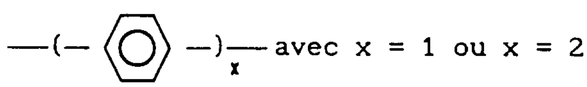

FIGURE 1

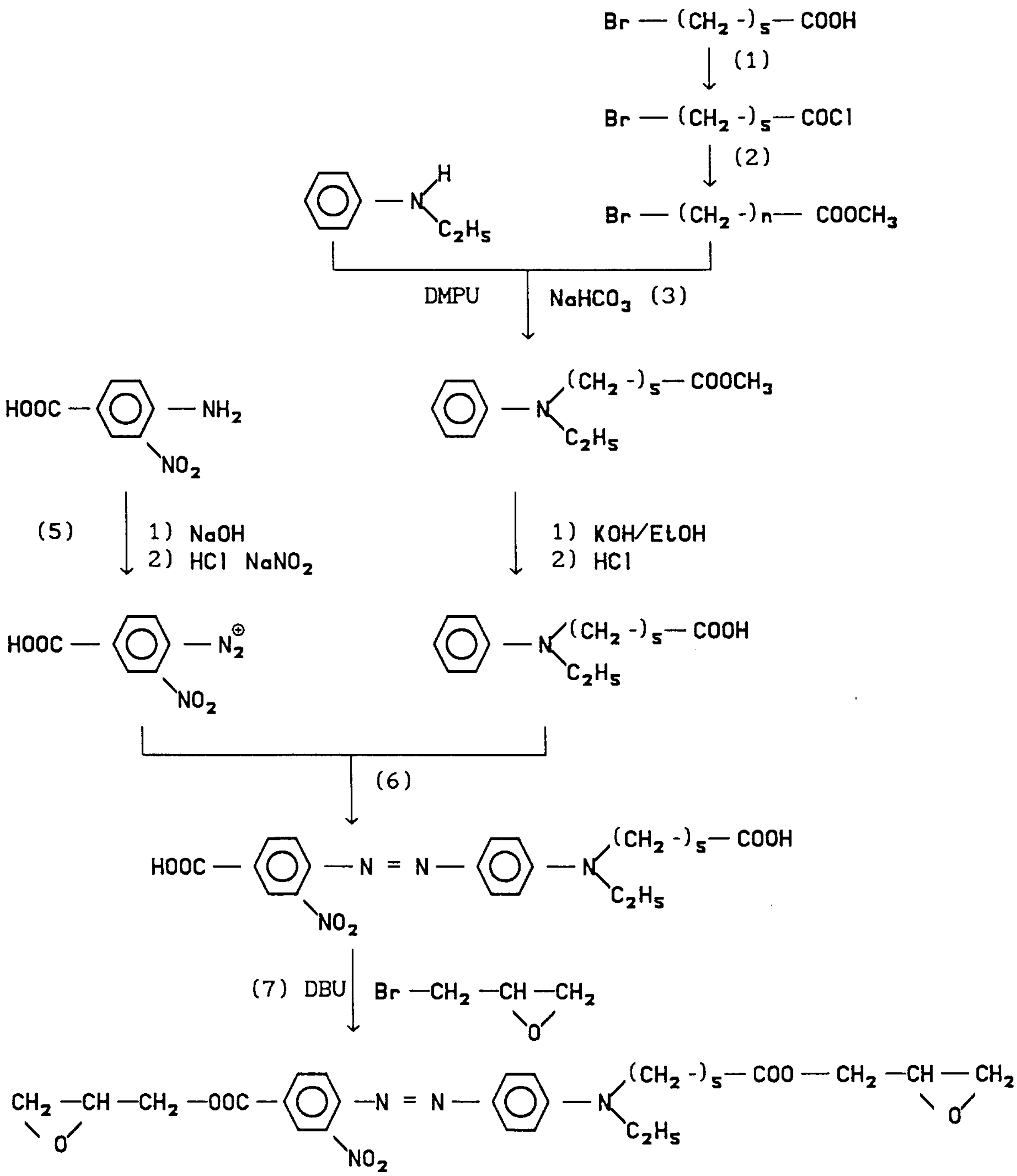


FIGURE 2

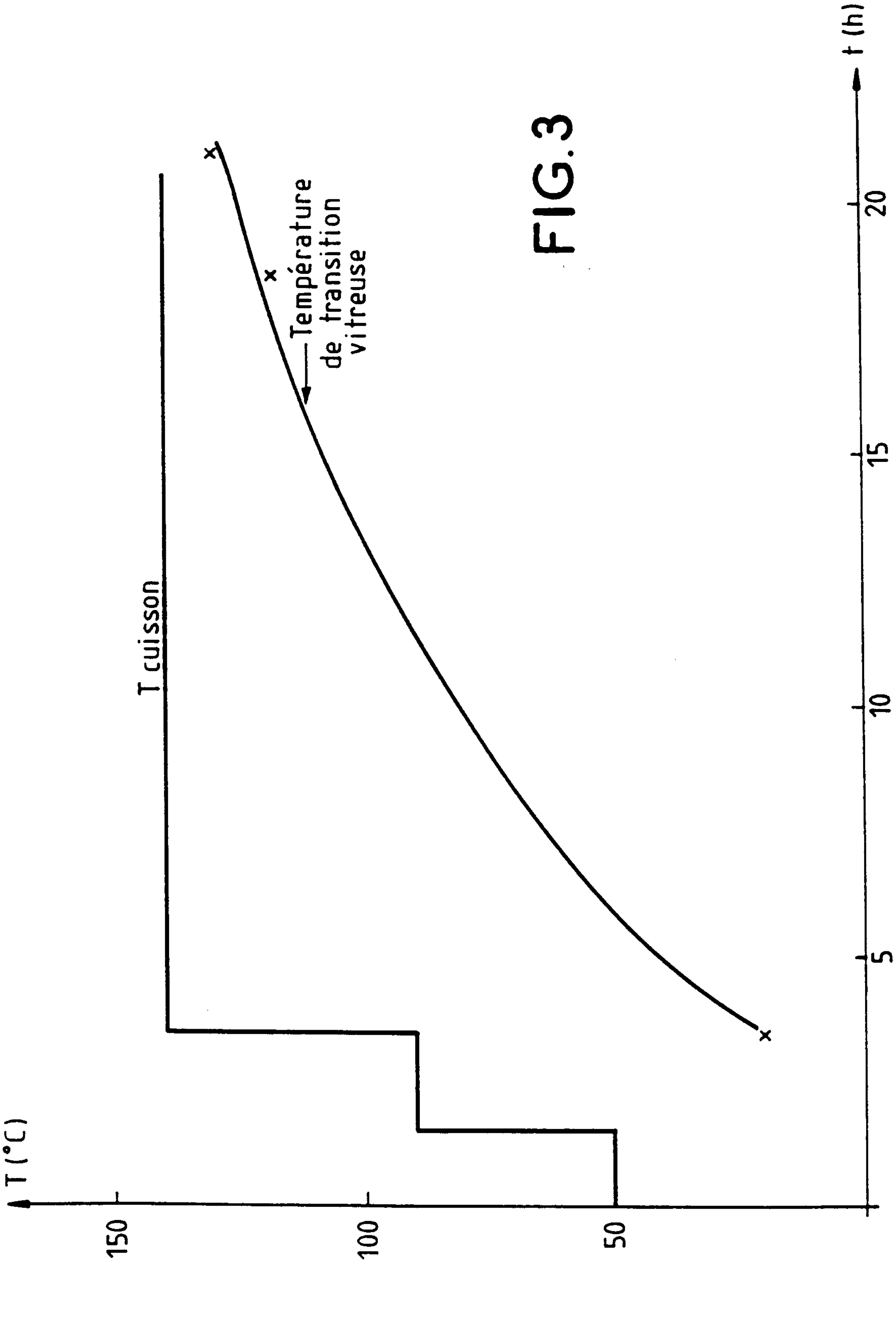
T (°C)
150
100
50
T cuisson
Température de transition vitreuse
5
10
15
20
t (h)

FIG.3

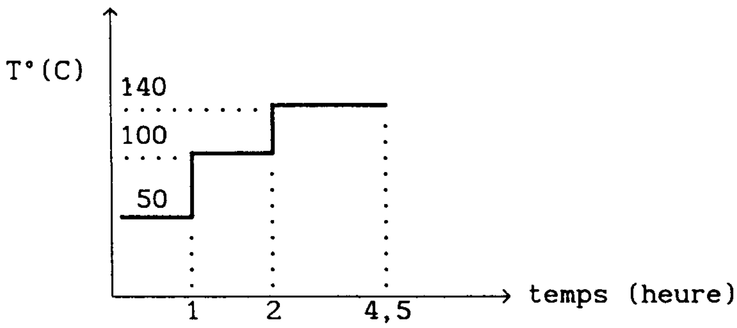


FIGURE 4

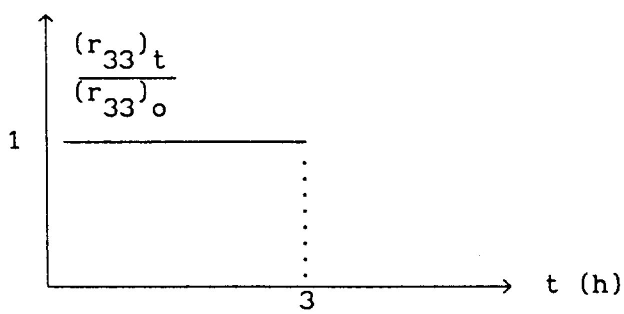


FIGURE 5